# EUROPEAN PATENT SPECIFICATION

(11) **EP 2 724 885 B1**
(45) Date of publication and mention of the grant of the patent: **26.07.2017**
(21) Application number: 11868016.4
(22) Date of filing: 23.06.2011
(51) Int. Cl.: B60L 3/00, B60L 5/24, B60M 3/04, B60L 5/28, B60L 9/00, B61L 15/00, B61L 25/02, B60M 1/18

(54) **TRAIN INFORMATION MANAGEMENT DEVICE AND TRAIN INFORMATION MANAGEMENT METHOD**
VORRICHTUNG ZUR VERWALTUNG VON ZUGINFORMATIONEN UND VERFAHREN ZUR VERWALTUNG VON ZUGINFORMATIONEN
DISPOSITIF DE GESTION D'INFORMATIONS DE TRAIN ET PROCÉDÉ DE GESTION D'INFORMATIONS DE TRAIN

(43) Date of publication of application: 30.04.2014
(73) Proprietor: Mitsubishi Electric Corporation, Tokyo 100-8310 (JP)
(72) Inventor: KADONO, Toshiko, Tokyo 100-8310 (JP); MIYAUCHI, Takashi, Tokyo 100-8310 (JP); KOMURA, Tetsuo, Tokyo 100-8310 (JP); HONDA, Shingo, Tokyo 100-8310 (JP); SAWA, Takuya, Tokyo 100-8310 (JP); TATSUMI, Shogo, Tokyo 100-8310 (JP)
(74) Representative: Zech, Stefan Markus
(86) International application number: PCT/JP2011/064352
(87) International publication number: WO 2012/176295

(56) References cited:
- GB-A- 224 668
- JP-A- 6 098 409
- JP-A- 6 217 403
- JP-A- 8 317 510
- JP-A- 2003 200 765
- JP-A- 2008 074 354
- US-A1- 2005 240 322
- US-A1- 2006 108 872

## Description

### Field

The present invention relates to a train-information management device and a train-information management method.

### Background

In overhead wires of railways, an apparatus referred to as "air section" that insulates a power system different between electric power substations by using air as an insulator is provided. Trains can continue running by receiving power supply from the overhead wires by the air section. Two overhead wires provided in the air section actually have a slight potential difference, even if a nominal voltage is the same. Therefore, when a train stops in the air section due to any circumstances (trains are not running on schedule, an emergency brake has been activated, or any unusual situation has occurred on a railway line), and resumes running in a state with a pantograph being raised, a large electric current may flow between the two overhead wires to cause damage of the pantograph, meltdown of the overhead wires, or shutdown of the electric power substation, thereby causing train diagram disruptions.

As measures against a case when a train stops in an air section, a train driver lowers pantographs. However, the train driver might forget to lower pantographs due to a judgment delay or insufficient skills, or might raise the pantographs again after having lowered them due to a misjudgment. To solve such problems, in conventional trains, when a train stops in a place other than at a platform of a station, such measures have been taken that guidance urging the train driver to confirm whether the train has stopped in the air section is provided by a speaker or a display provided in a cab of the train.

However, because various pieces of train information are provided to the cab, the train driver might fail to judge situations calmly due to these pieces of information, and although the guidance is provided by the speaker or the display, the train driver might raise the pantograph erroneously to cause the train to run again. Therefore, in recent years, a device that supports the train driver when the train stops in the air section has been desired.

For example, in a conventional technology represented by Patent Literature 1 mentioned below, it is configured to detect the position of a pantograph by a ground apparatus, when a train stops in an air section. Therefore, if it is configured such that position information of the pantograph detected by the ground apparatus is transmitted to an onboard apparatus, when the train stops, it is possible to inform a train driver as to whether the stopped position of the train is in the air section.

### Citation List

### Patent Literature

Patent Literature 1: Japanese Patent Application Laid-open No. 2007-261401

### Summary

### Technical Problem

However, the conventional technology represented by Patent Literature 1 mentioned above has such problems that not only considerable costs are required because of using a ground device but also measures against a situation in which a train driver erroneously raises pantographs are not taken into consideration.

The present invention has been achieved to solve the above problems, and an object of the present invention is to provide a train-information management device and a train-information management method that can suppress some damage when a train stops in the air section.

### Solution to Problem

In order to solve above-mentioned problems and achieve the object of the present invention, a train-information management device includes a train-information central device that manages train control information as a control command signal with respect to a device incorporated in a plurality of vehicles constituting a train formation, wherein the train-information central device includes an information processing unit that collates a distance in kilometers measured on the vehicle with track information including a position of an air section provided in overhead wires when the train stops, and outputs a 'lower pantograph' operation signal as train control information when determining that at least one pantograph is present in the air section, and detecting that the pantograph is in a raised state based on raised/lowered state information output from the pantograph. Advantageous Effects of Invention

According to the present invention, when it is determined that a pantograph is present in an air section when a train stops, and when it is detected that the pantograph is in a raised state, operations of the pantograph are controlled, and thus damage when a train stops in the air section can be suppressed.

### Brief Description of Drawings

FIG. 1 schematically depicts a formation of a train having a train-information management device according to an embodiment of the present invention incorporated therein.
FIG. 2 is a flowchart of a first operation example of the train-information management device.
FIG. 3 is a flowchart of a second operation example of the train-information management device.
FIG. 4 is a flowchart of a third operation example of the train-information management device.
FIG. 5 is a flowchart of a fourth operation example of the train-information management device.
FIG. 6 is an explanatory diagram of a first operation of an arithmetic processing unit when only a part of pantographs is present in an air section.
FIG. 7 is an explanatory diagram of a second operation of the arithmetic processing unit when only a part of pantographs is present in an air section.

### Description of Embodiments

Exemplary embodiments of a train-information management device and a train-information management method according to the present invention will be explained below in detail with reference to the accompanying drawings. The present invention is not limited to the embodiments.

### Embodiment.

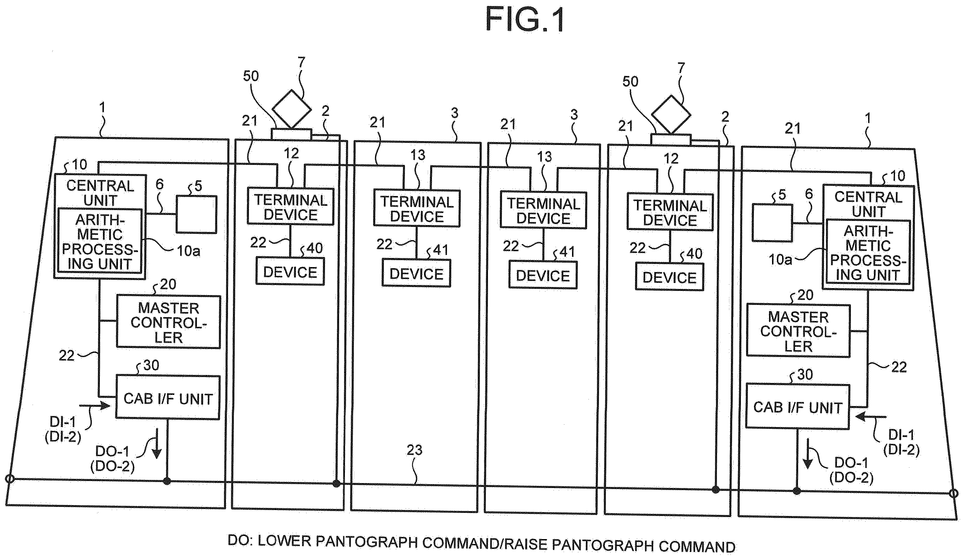

FIG. 1 schematically depicts a formation of a train having a train-information management device according to an embodiment of the present invention incorporated therein. In FIG. 1, for example, six vehicles constituting the train formation are shown. A first vehicle 1 includes a cab 5, and vehicles 2 and 3 are intermediate vehicles coupled with each other in order from the first vehicle 1. A trunk transmission line 21 and a train line 23 are arranged between the respective vehicles. The train line 23 is a signal line for transmitting command information (a brake command, a command to raise or lower the pantograph, and the like) associated with, for example, security control in the formation.

A central unit 10 that constitutes the train-information management device is incorporated in the first vehicle 1. The central unit 10 is connected to the trunk transmission line 21 and an on-board transmission line 22, and includes an arithmetic processing unit (information processing unit) 10a, a CPU and a memory, to function according to software that realizes the function of the train-information management device.

A master controller (master control unit) 20 and a cab I/F unit 30 connected to the on-board transmission line 22 is incorporated in the first vehicle 1. The master controller 20 transmits notch information and control input information required for driving such as a traveling direction to the central unit 10. For example, when a pantograph operation switch (not shown) provided on the cab 5 is operated, the cab I/F unit 30 fetches in a `raise pantograph' operation signal DI-1 or a 'lower pantograph' operation signal DI-2 generated by the arithmetic processing unit 10a based on an operation signal 6 from the pantograph operation switch, and outputs a `raise pantograph' command DO-1 or a 'lower pantograph' command DO-2.

Terminal devices 12 and 13 respectively connected to the trunk transmission line 21 to constitute the train-information management device, and devices 40 and 41 connected to the terminal devices 12 and 13 via the on-board transmission line 22 are incorporated in the vehicles 2 and 3. The devices 40 and 41 are, for example, a VVVF inverter (variable voltage variable frequency inverter), a brake control unit, an air-conditioning unit, an SIV (static inverter), or the like. A pantograph 7 is installed on a predetermined vehicle (for example, the vehicle 2), and an electric motor (not shown) that is driven by electric power supplied from overhead wires (not shown) via the pantograph 7 is mounted on a predetermined vehicle. The pantograph 7 is controlled by a pantograph drive circuit 50. The pantograph drive circuit 50 performs operations to raise or lower the pantograph 7 in conjunction with the 'raise pantograph' command DO-1 or the 'lower pantograph' command DO-2 from the cab I/F unit 30.

The train-information management device manages various types of train information such as train control information involved with control of the entire train such as train traffic information, train position information, a power running command, a brake command, and a door open/close command, and operating state information of devices. The central unit 10 and the terminal devices 12 and 13 operate in cooperation with each other to collect the information of the devices connected to the central unit 10 and the terminal devices 12 and 13, and share the information via the trunk transmission line 21.

FIG. 1 schematically depicts the connection of the transmission line, and does not limit the mode of connection. For example, the central unit 10 and the master controller 20 can be connected with each other by putting a hub (not shown) provided in the first vehicle 1 therebetween. The central unit 10 and the cab I/F unit 30 can be connected with each other by putting the hub (not shown) provided in the first vehicle 1 therebetween. Similarly, the terminal devices 12 and 13 and the devices 40 and 41 can be connected with each other by putting the hub (not shown) provided in the vehicles 2 and 3 therebetween. The devices 40 and 41 generally represent devices incorporated in the respective vehicles, and the number and type of devices are determined according to the actual configuration of vehicles. Accordingly, the number of devices shown in FIG. 1 is only one exapmple. Furthermore, the number of vehicles and the number of pantographs shown in FIG. 1 are not limited to the example shown in the drawings.

Operations of the train-information management device are explained below.

The control input information is transmitted to the central unit 10 via the on-board transmission line 22, and the arithmetic processing unit 10a in the central unit 10 generates train control information based on the control input information. The train control information is information related to distribution of a power running torque to the VVVF inverter (for example, power-running notch information), and is transmitted to the terminal devices 12 and 13 via the trunk transmission line 21. For example, the terminal devices 12 and 13 having received the train control information broadcast the train control information to the respective devices 40 and 41. The terminal devices 12 and 13 collect operating-state information data from the respective devices 40 and 41, and transmit these pieces of data to the central unit 10 regularly.

When the operation signal 6 from a pantograph operation switch (not shown) is a `raise pantograph' operation signal, the arithmetic processing unit 10a generates the 'raise pantograph' operation signal DI-1 and outputs the signal to the on-board transmission line 22. The cab I/F unit 30 having received the 'raise pantograph' operation signal DI-1 outputs the `raise pantograph' command DO-1 to the train line 23. Upon reception of the `raise pantograph' command DO-1 via the train line 23, the pantograph drive circuit 50 drives an expansion/contraction mechanism of the pantograph 7 to set the pantograph 7 in an expanded state. As a result, the pantograph 7 comes in contact with the overhead wires, thereby enabling to supply power from the overhead wires.

When the operation signal 6 from the pantograph operation switch (not shown) is a 'lower pantograph' operation signal, the arithmetic processing unit 10a generates the 'lower pantograph' operation signal DI-2 and outputs the signal to the on-board transmission line 22. The cab I/F unit 30 having received the 'lower pantograph' operation signal DI-2 outputs the 'lower pantograph' command DO-2 to the train line 23. Upon reception of the 'lower pantograph' command DO-2 via the train line 23, the pantograph drive circuit 50 drives the expansion/contraction mechanism of the pantograph 7 to contract the pantograph 7. As a result, the pantograph 7 separates from the overhead wires, to cut power supply from the overhead wires.

Operations when a train stops in an air section are specifically explained next.

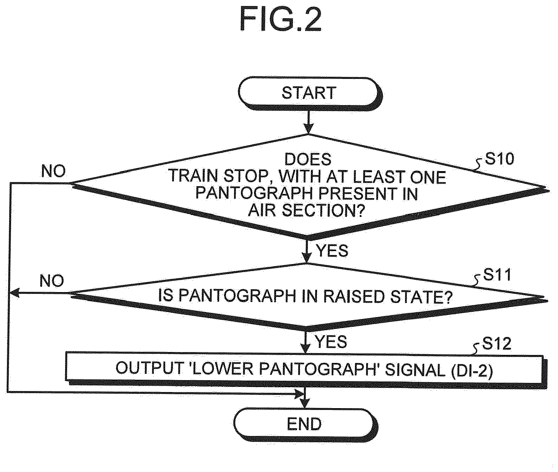

FIG. 2 is a flowchart of a first operation example of the train-information management device. First, when a train stops, the arithmetic processing unit 10a collates the distance in kilometers between respective stations measured on the vehicle with track information including the position of an air section, thereby ascertaining the stopped position of the train and the position of the pantograph 7 (position determining step: S10). When having determined that at least one pantograph 7 is present in an air section (YES at Step S10), the arithmetic processing unit 10a detects whether the pantograph 7 is in a raised state based on the operating state information (raised/lowered state information) transmitted from the pantograph 7 via the trunk transmission line 21 (pantograph detecting step: S11). When the pantograph 7 is in the raised state (YES at Step S11), the arithmetic processing unit 10a generates the 'lower pantograph' operation signal DI-2 and outputs the signal to the on-board transmission line 22 ('lower pantograph' operation signal outputting step: Step S12). The cab I/F unit 30 having received the 'lower pantograph' operation signal DI-2 outputs the 'lower pantograph' command DO-2, and the pantograph drive circuit 50 fetches in the 'lower pantograph' command DO-2. As a result, the pantograph 7 separates from the overhead wires. In this manner, if a raising/lowering operation of the pantograph 7 is controlled by determining whether the pantograph 7 is in the air section when the train stops and detecting that the pantograph 7 is in the raised state, damage when the train stops in the air section can be suppressed.

At Step S10, when having determined that the pantograph 7 is not present in the air section (NO at Step S10), the arithmetic processing unit 10a finishes the operation without performing the process at Step S11. At Step S11, for example, when the pantograph 7 is in the lowered state because the 'lower pantograph' operation signal is output immediately after the train has stopped in the air section (NO at Step S11), the arithmetic processing unit 10a finishes the operation without performing the process at Step S12.

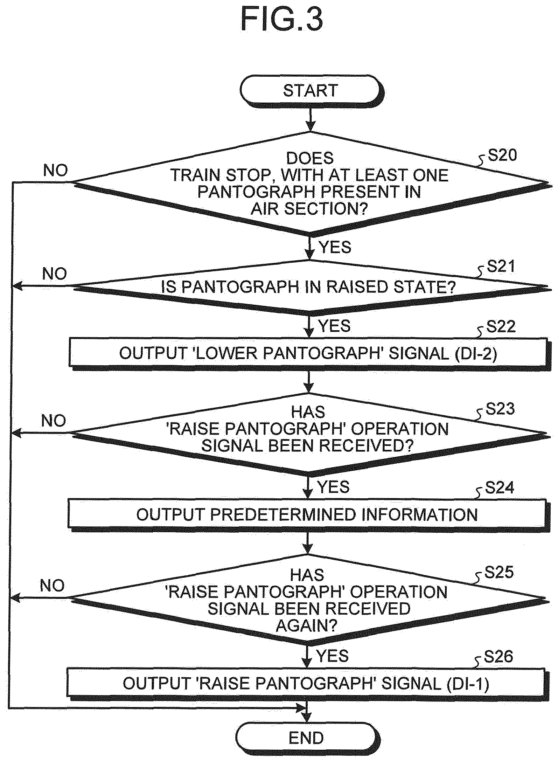

FIG. 3 is a flowchart of a second operation example of the train-information management device. First, when a train stops, the arithmetic processing unit 10a collates the distance in kilometers between respective stations measured on the vehicle with track information including the position of an air section, thereby ascertaining the stopped position of the train and the position of the pantograph 7. When having determined that at least one pantograph 7 is present in an air section (YES at Step S20), the arithmetic processing unit 10a detects whether the pantograph 7 is in the raised state based on the operating state information (raised/lowered state information) transmitted from the pantograph 7 via the trunk transmission line 21. When the pantograph 7 is in the raised state (YES at Step S21), the arithmetic processing unit 10a generates the 'lower pantograph' operation signal DI-2 and outputs the signal to the on-board transmission line 22 (Step S22). The cab I/F unit 30 having received the 'lower pantograph' operation signal DI-2 outputs the 'lower pantograph' command DO-2, and the pantograph drive circuit 50 fetches in the 'lower pantograph' command DO-2. As a result, the pantograph 7 separates from the overhead wires.

At this time, when the 'raise pantograph' operation is performed although the pantograph 7 separates from the overhead wires, the 'raise pantograph' operation signal is output from the pantograph operation switch. When the arithmetic processing unit 10a receives the 'raise pantograph' operation signal (YES at Step S23) after having output the 'lower pantograph' operation signal DI-2 at Step S22, the arithmetic processing unit 10a outputs first predetermined information to at least one of a speaker and a display (both not shown) provided in the cab 5 (first-information outputting step: S24). The first predetermined information is audio information or visualized message information, which is, for example, "Is it possible to execute a 'raise pantograph' operation although the train has stopped in the air section?", "Please run slow at one notch because the train has stopped in the air section", or "Have you confirmed with a command and control center whether to resume operation?". When the notch information having a large value is input due to an erroneous operation of the notch, this matter is notified to a train driver by outputting such information, thereby enabling to suppress adverse effects to the overhead wires and the like.

After a predetermined time has passed since outputting of the first predetermined information, upon reception of the `raise pantograph' operation signal again (YES at Step S25), the arithmetic processing unit 10a outputs the 'raise pantograph' operation signal DI-1 (`raise pantograph' operation signal outputting step: Step S26). As a result, the pantograph 7 comes in contact with the overhead wires, thereby enabling to supply power from the overhead wires. For example, when power consumption of the train being stopped in the air section is small, the train may be moved to outside of the air section without affecting the overhead wires and the like by causing the train to run at a very low speed. The operations at Steps S25 and S26 correspond to a case where the train driver performs such operations.

At Step S20, when having determined that the pantograph 7 is not present in the air section (NO at Step S20), the arithmetic processing unit 10a finishes the operation without performing the process at Step S21. At Step S21, for example, when the pantograph 7 is in the lowered state because the 'lower pantograph' operation signal is output immediately after the train has stopped in the air section (NO at Step S21), the arithmetic processing unit 10a finishes the operation without performing the process at Step S22. At Step S23, when the arithmetic processing unit 10a does not receive the 'raise pantograph' operation signal (NO at Step S23), the arithmetic processing unit 10a finishes the operation without performing the process at Step S24. At Step S25, when the arithmetic processing unit 10a does not receive the `raise pantograph' operation signal after a predetermined time has passed since outputting of the first predetermined information (NO at Step S25), the arithmetic processing unit 10a finishes the operation without performing the process at Step S26.

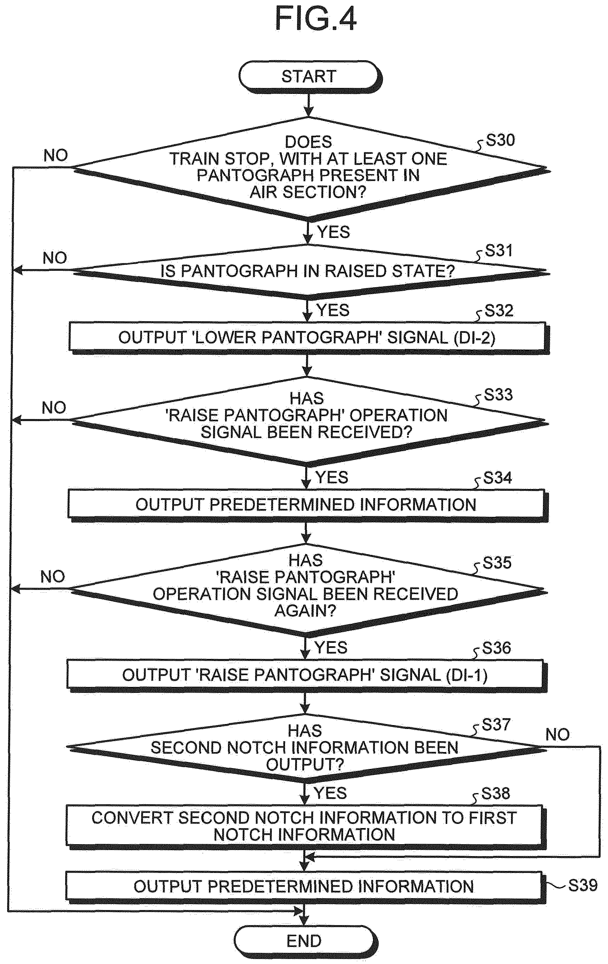

FIG. 4 is a flowchart of a third operation example of the train-information management device. First, when a train stops, the arithmetic processing unit 10a collates the distance in kilometers between respective stations measured on the vehicle with track information including the position of an air section, thereby ascertaining the stopped position of the train and the position of the pantograph 7. When having determined that at least one pantograph 7 is present in an air section (YES at Step S30), the arithmetic processing unit 10a detects whether the pantograph 7 is in the raised state based on the operating state information (raised/lowered state information) transmitted from the pantograph 7 via the trunk transmission line 21. When the pantograph 7 is in the raised state (YES at Step S31), the arithmetic processing unit 10a generates the 'lower pantograph' operation signal DI-2 and outputs the signal to the on-board transmission line 22 (Step S32). The cab I/F unit 30 having received the 'lower pantograph' operation signal DI-2 outputs the 'lower pantograph' command DO-2, and the pantograph drive circuit 50 fetches in the 'lower pantograph' command DO-2. As a result, the pantograph 7 separates from the overhead wires.

Next, when the `raise pantograph' operation is performed although the pantograph 7 separates from the overhead wires, the `raise pantograph' operation signal is output from the pantograph operation switch. When the arithmetic processing unit 10a receives the 'raise pantograph' operation signal (YES at Step S33) after having output the 'lower pantograph' operation signal DI-2 at Step S32, the arithmetic processing unit 10a outputs the first predetermined information to at least one of a speaker and a display (both not shown) provided in the cab 5 (Step S34). After a predetermined time has passed since outputting of the first predetermined information, when having received the 'raise pantograph' operation signal again (YES at Step S35), the arithmetic processing unit 10a outputs the 'raise pantograph' operation signal DI-1 (Step S36).

Next, when the master controller 20 outputs second notch information with a value larger than a minimum value of first notch information (YES at Step S37), the arithmetic processing unit 10a converts the second notch information to the first notch information (notch-information converting step: Step S38). The first notch information is a requisite minimum notch for the train being stopped to move out of the air section (for example, one notch), and the second notch information is, for example, two notches or more. With this process, when the train is caused to move out of the air section, even if the notch information having a large value is input due to an erroneous operation of the notch, an excessive current is prevented from flowing in the overhead wires, and adverse effects to the overhead wires and the like can be suppressed.

The arithmetic processing unit 10a then outputs the second predetermined information to at least one of the speaker and the display (both not shown) provided in the cab 5 (second-information outputting step: Step S39). The second predetermined information is audio information or visualized message information, which is, for example, "The train is in operation based on the first notch information". By outputting this information, even when the operation exceeding two notches is currently performed, the train driver can calmly perform a notch operation with respect to the fact that the train does not accelerate.

At Step S30, when having determined that the pantograph 7 is not present in the air section (NO at Step S30), the arithmetic processing unit 10a finishes the operation without performing the process at Step S31. At Step S31, for example, when the pantograph 7 is in the lowered state because the 'lower pantograph' operation signal is output immediately after the train has stopped in the air section (NO at Step S31), the arithmetic processing unit 10a finishes the operation without performing the process at Step S32. At Step S33, when the arithmetic processing unit 10a does not receive the 'raise pantograph' operation signal (NO at Step S33), the arithmetic processing unit 10a finishes the operation without performing the process at Step S34. At Step S35, when the arithmetic processing unit 10a does not receive the 'raise pantograph' operation signal after the predetermined time has passed since outputting of the first predetermined information (NO at Step S35), the arithmetic processing unit 10a finishes the operation without performing the process at Step S36. Furthermore, at Step S37, when the second notch information has not been output from the master controller 20 (NO at Step S37), the arithmetic processing unit 10a performs the process at Step S39.

In the operation example shown in FIG. 4, after the 'lower pantograph' operation signal is output (Step S32), the 'raise pantograph' operation signal is received (Step S33) to output the first predetermined information (Step S34), and when the 'raise pantograph' operation signal is received again (YES at Step S35), the 'raise pantograph' operation signal DI-1 is output (Step S36). However, the operation at Step S37 can be performed after the operation at Step S33. For example, after outputting the 'lower pantograph' operation signal (Step S32), the arithmetic processing unit 10a receives the 'raise pantograph' operation signal (Step S33), and when the second notch information with a value larger than that of the first notch information is output from the master controller 20 (YES at Step S37), the arithmetic processing unit 10a converts the second notch information to the first notch information (Step S38). With this configuration, because the operation at Step S34 can be omitted, the train can be immediately moved. The operation at Step S39 can be inserted after the operation at Step S38.

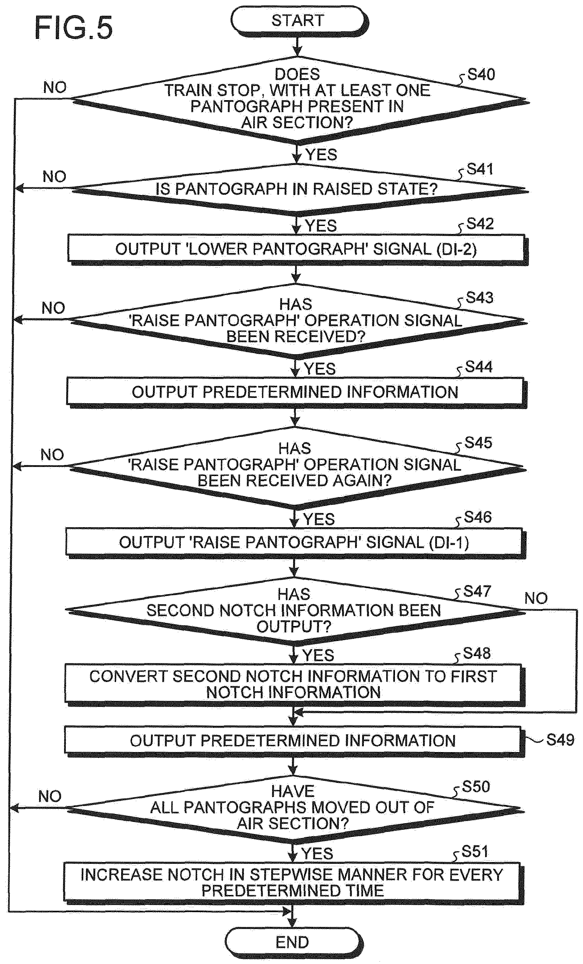

FIG. 5 is a flowchart of a fourth operation example of the train-information management device. First, when a train stops, the arithmetic processing unit 10a collates the distance in kilometers between respective stations measured on the vehicle with track information including the position of an air section, thereby ascertaining the stopped position of the train and the position of the pantograph 7. When having determined that at least one pantograph 7 is present in an air section (YES at Step S40), the arithmetic processing unit 10a detects whether the pantograph 7 is in the raised state based on the operating state information (raised/lowered state information) transmitted from the pantograph 7 via the trunk transmission line 21. When the pantograph 7 is in the raised state (YES at Step S41), the arithmetic processing unit 10a generates the 'lower pantograph' operation signal DI-2 and outputs the signal to the on-board transmission line 22 (Step S42). The cab I/F unit 30 having received the 'lower pantograph' operation signal DI-2 outputs the 'lower pantograph' command DO-2, and the pantograph drive circuit 50 fetches in the 'lower pantograph' command DO-2. As a result, the pantograph 7 separates from the overhead wires.

Next, when the 'raise pantograph' operation is performed although the pantograph 7 separates from the overhead wires, the 'raise pantograph' operation signal is output from the pantograph operation switch. When the arithmetic processing unit 10a receives the 'raise pantograph' operation signal (YES at Step S43) after having output the 'lower pantograph' operation signal DI-2 at Step S42, the arithmetic processing unit 10a outputs the first predetermined information to at least one of a speaker and a display (both not shown) provided in the cab 5 (Step S44). After a predetermined time has passed since outputting of the first predetermined information, when having received the 'raise pantograph' operation signal again (YES at Step S45), the arithmetic processing unit 10a outputs the 'raise pantograph' operation signal DI-1 (Step S46). Next, when the master controller 20 outputs second notch information with a value larger than a minimum value of first notch information (YES at Step S47), the arithmetic processing unit 10a converts the second notch information to the first notch information (Step S48). The arithmetic processing unit 10a then outputs the second predetermined information to at least one of the speaker and the display (both not shown) provided in the cab 5 (Step S49). The second predetermined information is audio information or visualized message information, which is, for example, "The train is in operation based on the first notch information".

In this case, when all the pantographs 7 move out of the air section, if the train can accelerate immediately with the second notch information, train diagram disruptions can be suppressed to the minimum. However, at Step S48, because the train speed in the air section has been limited, if changeover from the first notch information (for example, one notch) to the second notch information (for example, four notches) is performed simultaneously with all the pantographs 7 moving out of the air section, degradation of train ride quality may be caused because of a large speed-change shock. Therefore, when all the pantographs 7 move out of the air section (YES at Step S50), the arithmetic processing unit 10a performs a process to increase the notch information in a stepwise manner for every predetermined time (notch adjusting step: Step S51). By performing such a process, even if the notch is, for example, four notches when all the pantographs 7 move out of the air section, the notch information is increased, for example, from one notch in a stepwise manner to reach four notches. Accordingly, degradation of train ride quality can be suppressed as compared with a case where the notch information is not increased in a stepwise manner.

At Step S40, when having determined that the pantograph 7 is not present in the air section (NO at Step S40), the arithmetic processing unit 10a finishes the operation without performing the process at Step S41. At Step S41, for example, when the pantograph 7 is in the lowered state because the 'lower pantograph' operation signal is output immediately after the train has stopped in the air section (NO at Step S41), the arithmetic processing unit 10a finishes the operation without performing the process at Step S42. Furthermore, when the `raise pantograph' operation signal is not received at Step S43 (NO at Step S43), the arithmetic processing unit 10a finishes the operation without performing the process at Step S44. At Step S45, when the 'raise pantograph' operation signal is not received after the predetermined time has passed since outputting of the first predetermined information (NO at Step S45), the arithmetic processing unit 10a finishes the operation without performing the process at Step S46. When the second notch information is not output from the master controller 20 at Step S47 (NO at Step S47), the arithmetic processing unit 10a performs a process at Step S49. When all the pantographs 7 have not moved out of the air section at Step S50 (NO at Step S50), the arithmetic processing unit 10a maintains the notch without increasing the notch.

The arithmetic processing unit 10a can individually control the plurality of pantographs 7 mounted on the train. An example thereof is specifically explained below.

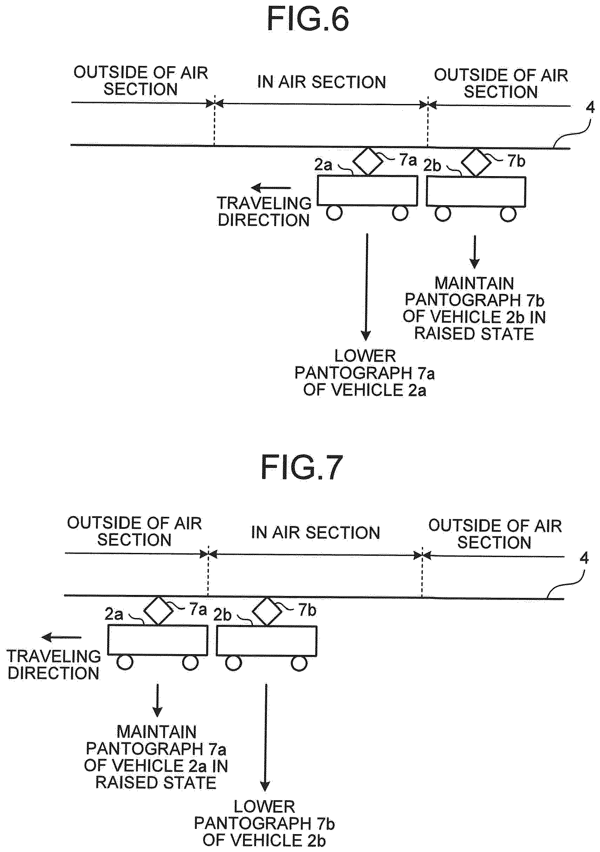

FIG. 6 is an explanatory diagram of a first operation of the arithmetic processing unit 10a when only a part of the pantographs is present in an air section, and depicts a state where only a pantograph 7a mounted on a vehicle 2a on a traveling direction side is present in the air section. FIG. 7 is an explanatory diagram of a second operation of the arithmetic processing unit 10a when only a part of the pantographs is present in an air section, and depicts a state where only a pantograph 7b mounted on a vehicle 2b on an opposite side to the traveling direction is present in the air section.

The arithmetic processing unit 10a can determine which one of the plurality of pantographs 7 is present in an air section by ascertaining the position of the air section.

In FIG. 6, when the train stops near an entrance of the air section, (that is, in a case where the pantograph 7a on the traveling direction side is present in the air section and the pantograph 7b other than the pantograph 7a is present outside the air section), the arithmetic processing unit 10a specifies the pantograph 7 present in the air section by ascertaining the position of the air section, and for example, lowers the pantograph 7a and maintains the pantograph 7b in a raised state. In this manner, by controlling the pantographs 7a and 7b, even if the train cannot move in the traveling direction due to an accident or the like having occurred ahead of the air section, power can be supplied from the pantograph 7b, thereby enabling to continue an operation of, for example, air conditioning in the vehicle. Because the train can be moved in a direction opposite to the traveling direction by receiving power supply from the pantograph 7b, by moving the train to outside of the air section, power supply even from the pantograph 7a can be received, and overhead wires 4 and the like are not affected.

In FIG. 7, when the train stops near an exit of the air section (that is, in a case where the pantograph 7a on the traveling direction side is present outside the air section and the pantograph 7b other than the pantograph 7a is present in the air section), the arithmetic processing unit 10a specifies the pantograph 7 present in the air section by ascertaining the position of the air section, and for example, raises the pantograph 7a and maintains the pantograph 7b in the lowered state. By controlling the pantographs 7a and 7b in this manner, even if the train cannot move in the traveling direction due to an accident or the like having occurred ahead of the air section, for example, an operation of air conditioning in the vehicle can be continued. When a train operation is started, the operation can be started immediately by receiving power supply from the pantograph 7a. The number of vehicles and the number of pantographs shown in FIGS. 6 and 7 are not limited to the illustrated examples.

The operations of the arithmetic processing unit 10a explained with reference to FIGS. 6 and 7 are included, for example, at Step S10 (position determining step), of the determination flow shown in FIG. 2, as a pantograph control step. For example, if the partial pantograph 7a is present in the air section when the train stops, such a control is performed at the pantograph control step that the 'lower pantograph' operation signal DI-2 is output to the pantograph 7a, and the 'lower pantograph' operation signal DI-2 is not output to the pantograph 7b present outside the air section. Furthermore, if the partial pantograph 7b is present in the air section when the train stops, such a control is performed at the pantograph control step that the 'lower pantograph' operation signal DI-2 is output to the pantograph 7b, and the 'lower pantograph' operation signal DI-2 is not output to the pantograph 7a present outside the air section.

As described above, when the train-information management device according to the present embodiment collates the distance in kilometers measured on the vehicle with the track information including the position of the air section, when the train stops, to determine that at least one pantograph 7 is present in the air section (Step S10), and when it is detected that the pantograph 7 is in the raised state based on the raised/lowered state information output from the pantograph 7 (Step S11), the train-information management device outputs the 'lower pantograph' operation signal DI-2 as train control information (Step S12). Therefore, when the train stops in the air section, the pantograph 7 can be automatically lowered only by the in-vehicle information, without using the information from the ground device. As a result, damage when the train stops in the air section can be suppressed, and the cost associated with establishing of the ground device or the like, which has been required in the conventional technique, can be suppressed.

Upon reception of the `raise pantograph' operation signal from the pantograph operation switch (Step S23) after the 'lower pantograph' operation signal DI-2 is output (Step S22), the train-information management device according to the present embodiment outputs the first predetermined information to at least one of the speaker and the display provided in the cab 5. Accordingly, even when the notch information having a large value is input due to an erroneous operation of the notch, this matter is notified to the train driver, thereby enabling to suppress adverse effects to the overhead wires and the like.

Upon reception of the `raise pantograph' operation signal again after the predetermined time has passed since outputting of the first predetermined information (Step S25), the train-information management device according to the present embodiment outputs the `raise pantograph' operation signal DI-1 as train control information (Step S26). Accordingly, the train can be caused to travel by the notch operation in a situation such that the train can be moved at a very low speed.

When the 'raise pantograph' operation signal is received from the pantograph operation switch after the 'lower pantograph' operation signal DI-2 is output and the second notch information with a value larger than that of the first notch information is output from the master controller 20 (Step S37), the train-information management device according to the present embodiment converts the second notch information to the first notch information (Step S38). Accordingly, even when the notch information having a large value is input due to an erroneous operation of the notch, an excessive current is prevented from flowing in the overhead wires.

Because the train-information management device according to the present embodiment outputs the second predetermined information to at least one of the speaker and the display provided in the cab 5 (Step S39) after converting the second notch information to the first notch information (Step S38), even when the operation exceeding two notches is currently performed, the train driver can calmly perform a notch operation with respect to the fact that the train does not accelerate.

When all the pantographs 7 move out of the air section (Step S50) after the second notch information is converted to the first notch information (Step S48), the train-information management device according to the present embodiment controls to increase the notch information in a stepwise manner for every predetermined time (Step S51). Accordingly, even when the notch has a large value when all the pantographs 7 move out of the air section, degradation of train ride quality can be suppressed.

If the partial pantograph 7a (7b) is present in the air section when the train stops, the train-information management device according to the present embodiment outputs the 'lower pantograph' operation signal DI-2 to the pantograph 7a (7b) present in the air section, and does not output the 'lower pantograph' operation signal DI-2 to the pantograph 7b (7a) present outside the air section. Accordingly, even if the train cannot move in the traveling direction, the operation of air conditioning in the vehicle can be continued, and the train can be moved to outside of the air section.

The first notch information is not limited to one notch, and can be a notch that can move a train, which has stopped in an air section, without affecting overhead wires and the like. Furthermore, the train-information management device according to the present embodiment can be configured to determine whether the power consumption value is higher than a predetermined value to set a control command signal to the VVVF to a zero notch, even when the first notch information of one notch is input, when power consumption in the train is large (for example, the operational status of air conditioning and the operating condition of a compressor of a brake control device are high). With this configuration, the damage at the time of moving the train out of the air section can be further reduced.

### Industrial Applicability

As described above, the present invention can be applicable to a train-information management device, and is useful as an invention that can suppress damage when a train stops in the air section.

### Reference Signs List

1 first vehicle
2, 2a, 2b, 3 vehicle
4 overhead wire
5 cab
6 operation signal
7, 7a, 7b pantograph
10 central unit
10a arithmetic processing unit (information processing unit)
12, 13 terminal device
20 master controller
21 trunk transmission line
22 on-board transmission line
23 train line
30 cab I/F unit
40, 41 device
50 pantograph drive circuit
DI-1 'raise pantograph' operation signal
DI-2 'lower pantograph' operation signal
DO-1 'raise pantograph' command
DO-2 'lower pantograph' command

## Claims

1. A train-information management device comprising a train-information central device that manages train control information as a control command signal with respect to a device (40,41) incorporated in a plurality of vehicles constituting a train formation, wherein the train-information central device includes an information processing unit (10a) that collates a distance in kilometers measured on the vehicle with track information including a position of an air section provided in overhead wires when the train stops, and outputs a 'lower pantograph' operation signal (DI-2) as train control information when determining that at least one pantograph is present in the air section, and detecting that the pantograph is in a raised state based on raised/lowered state information output from the pantograph.

2. The train-information management device according to claim 1, wherein when the information processing unit (10a) receives a 'raise pantograph' operation signal (DI-1) from a pantograph operation switch after outputting the 'lower pantograph' operation signal (DI-2), the information processing unit (10a) outputs first information to at least one of a speaker and a display provided in a cab (5).

3. The train-information management device according to claim 2, wherein after a predetermined time passes since outputting of the first information, upon reception of the 'raise pantograph' operation signal (DI-1) again, the information processing unit outputs (10a) the 'raise pantograph' operation signal (DI-1) as the train control information.

4. The train-information management device according to claim 1, wherein a master controller (20) that outputs power-running notch information is incorporated in the vehicle, and when the information processing unit (10a) receives a 'raise pantograph' operation signal (DI-1) from a pantograph operation switch after outputting the 'lower pantograph' operation signal (DI-2), and the master controller (20) outputs second power-running notch information with a value larger than a minimum value of first power-running notch information, the information processing unit (10a) converts the second power-running notch information to the first power-running notch information.

5. The train-information management device according to claim 4, wherein the information processing unit (10a) outputs second information to at least one of a speaker and a display provided in a cab, after converting the second power-running notch information to the first power-running notch information.

6. The train-information management device according to claim 4, wherein when all the pantographs (7) move out of the air section after the second power-running notch information is converted to the first power-running notch information, the information processing unit (10a) increases the power-running notch information in a stepwise manner an every predetermined time.

7. The train-information management device according to claim 1, wherein when a part of pantographs (7) is present in the air section when the train stops, the information processing unit (10a) outputs the 'lower pantograph' operation signal (DI-2) to the pantograph present in the air section, and does not output the 'lower pantograph' operation signal (DI-2) to the pantograph present outside the air section.

8. A train-information management method applicable to a train-information central device that manages train control information as a control command signal with respect to a device (40, 41) incorporated in a plurality of vehicles constituting a train formation, the train-information management method comprising:
a position determining step at which a distance in kilometers measured on the vehicle is collated with track information including a position of an air section provided in overhead wires when the train stops, to determine whether at least one pantograph is present in the air section; a pantograph detecting step at which when it is determined that the pantograph is present in the air section at the position determining step, it is detected whether the pantograph is in a raised state based on raised/lowered state information output from the pantograph; and a 'lower pantograph' operation signal outputting step at which when it is detected that the pantograph is in the raised state at the pantograph detecting step, a 'lower pantograph' operation signal (DI-2) is output as train control information.

9. The train-information management method according to claim 8, comprising a first information outputting step at which when a 'raise pantograph' operation signal (DI-1) is received from a pantograph operation switch after the 'lower pantograph' operation signal outputting step, a first information is output to at least one of a speaker and a display provided in a cab.

10. The train-information management method according to claim 9, comprising a 'raise pantograph' operation signal outputting step at which when the 'raise pantograph' operation signal (DI-1) is received again after a predetermined time passes since outputting of the first information after the first information outputting step, a 'raise pantograph' operation signal (DI-1) is output as the train control information.

11. The train-information management method according to claim 8, comprising a notch information converting step at which when a 'raise pantograph' operation signal (DI-1) is received from a pantograph operation switch, and second power-running notch information with a value larger than a minimum value of first power-running notch information is output after the 'lower pantograph' operation signal outputting step, the second power-running notch information is converted to the first power-running notch information.

12. The train-information management method according to claim 11, comprising a second information outputting step at which a second information is output to at least one of a speaker and a display provided in a cab (5), after the notch information converting step.

13. The train-information management method according to claim 11, comprising a notch adjusting step at which when all the pantographs (7) move out of the air section, the power-running notch information is increased in a stepwise manner an every predetermined time, after the notch information converting step.

14. The train-information management method according to claim 8, wherein the position determining step includes a pantograph control step at which when a part of pantographs (7) is present in the air section when the train stops, the 'lower pantograph' operation signal (DI-2) is output to the pantograph present in the air section, and the 'lower pantograph' operation signal (DI-2) is not output to the pantograph present outside the air section.

## Patentansprüche

1. Vorrichtung zur Verwaltung von Zuginformationen, eine Zuginformationszentralvorrichtung umfassend, die Zugsteuerinformationen als Steuerbefehlssignal im Hinblick auf eine Vorrichtung (40, 41) verwaltet, die in mehreren Wägen eingebaut ist, die eine Zugformation bilden, wobei die Zuginformationszentralvorrichtung eine Informationsverarbeitungseinheit (10a) umfasst, die eine am Wagen gemessene Distanz in Kilometern mit Spurinformationen einschließlich einer Position eines Luftbereichs kombiniert, der in Oberleitungen bereitsteht, wenn der Zug anhält, und ein Betriebssignal 'Pantograph absenken' (DI-2) als Zugsteuerinformation ausgibt, wenn bestimmt wird, dass mindestens ein Pantograph in dem Luftbereich vorhanden ist, und auf Grundlage von vom Pantographen ausgegebenen Anhebungs-/Absenkungszustandsinformationen erfasst wird, dass der Pantograph in einem angehobenen Zustand ist.

2. Vorrichtung zur Verwaltung von Zuginformationen nach Anspruch 1, wobei, wenn die Informationsverarbeitungseinheit (10a) ein Betriebssignal 'Pantograph anheben' (DI-1) nach Ausgabe des Betriebssignals 'Pantograph absenken' (DI-2) von einem Pantographbetriebsschalter erhält, die Informationsverarbeitungseinheit (10a) erste Informationen an einen Lautsprecher und/oder eine Anzeige ausgibt, der bzw. die in einem Führerstand (5) vorgesehen ist bzw. sind.

3. Vorrichtung zur Verwaltung von Zuginformationen nach Anspruch 2, wobei nach Verstreichen einer vorbestimmten Zeit, seit die ersten Informationen ausgegeben wurden, beim erneuten Empfang des Betriebssignals 'Pantograph anheben' (DI-1), die Informationsverarbeitungseinheit (10a) das Betriebssignal 'Pantograph anheben' (DI-1) als Zugsteuersteuerinformation ausgibt.

4. Vorrichtung zur Verwaltung von Zuginformationen nach Anspruch 1, wobei eine Hauptsteuerung (20), die Leistungslauf-Stufeninformationen ausgibt, im Wagen eingebaut ist, und wenn die Informationsverarbeitungseinheit (10a) ein Betriebssignal 'Pantograph anheben' (DI-1) von einem Pantographbetriebsschalter nach Ausgabe des Betriebssignals 'Pantograph absenken' (DI-2) erhält, und die Hauptsteuerung (20) die zweiten Leistungslauf-Stufeninformationen mit einem Wert ausgibt, der größer ist als ein Mindestwert der ersten Leistungslauf-Stufeninformationen, die Informationsverarbeitungseinheit (10a) die zweiten Leistungslauf-Stufeninformationen in die ersten Leistungslauf-Stufeninformationen umwandelt.

5. Vorrichtung zur Verwaltung von Zuginformationen nach Anspruch 4, wobei die Informationsverarbeitungseinheit (10a) zweite Informationen an einen Lautsprecher und/oder eine Anzeige ausgibt, der bzw. die in einem Führerstand vorgesehen ist bzw. sind, nachdem die zweiten Leistungslauf-Stufeninformationen in die ersten Leistungslauf-Stufeninformationen umgewandelt wurden.

6. Vorrichtung zur Verwaltung von Zuginformationen nach Anspruch 4, wobei, wenn sich alle Pantographen (7) aus dem Luftbereich herausbewegen, nachdem die zweiten Leistungslauf-Stufeninformationen in die ersten Leistungslauf-Stufeninformationen umgewandelt wurden, die Informationsverarbeitungseinheit (10a) die Leistungslauf-Stufeninformationen schrittweise zu einem jeweiligen vorbestimmten Zeitpunkt vermehrt.

7. Vorrichtung zur Verwaltung von Zuginformationen nach Anspruch 1, wobei, wenn ein Teil der Pantographen (7) in dem Luftbereich vorhanden ist, wenn der Zug anhält, die Informationsverarbeitungseinheit (10a) das Betriebssignal 'Pantograph absenken' (DI-2) an den im Luftbereich vorhanden Pantographen ausgibt und das Betriebssignal 'Pantograph absenken ' (DI-2) an den außerhalb des Luftbereichs vorhandenen Pantographen nicht ausgibt.

8. Verfahren zur Verwaltung von Zuginformationen, das sich auf eine Zuginformationszentralvorrichtung anwenden lässt, die Zugsteuerinformationen als Steuerbefehlssignal im Hinblick auf eine Vorrichtung (40, 41) verwaltet, die in mehreren Wägen eingebaut ist, die eine Zugformation bilden, wobei das Verfahren zur Verwaltung von Zuginformationen umfasst:
einen Positionsbestimmungsschritt, in dem eine am Wagen gemessene Distanz in Kilometern mit Spurinformationen einschließlich einer Position eines Luftbereichs kombiniert wird, der in Oberleitungen bereitsteht, wenn der Zug anhält, um zu bestimmen, ob mindestens ein Pantograph in dem Luftbereich vorhanden ist; einen Pantographerfassungsschritt, in dem, wenn im Positionsbestimmungsschritt bestimmt wird, dass der Pantograph in dem Luftbereich vorhanden ist, auf Grundlage von vom Pantographen ausgegebenen Anhebungs-/Absenkungszustandsinformationen erfasst wird, ob der Pantograph in einem angehobenen Zustand ist; und einen Ausgabeschritt eines Betriebssignals 'Pantograph absenken', in dem, wenn im Pantographerfassungsschritt erfasst wird, dass der Pantograph in einem angehobenen Zustand ist, ein Betriebssignal 'Pantograph absenken ' (DI-2) als Zugsteuerinformation ausgegeben wird.

9. Verfahren zur Verwaltung von Zuginformationen nach Anspruch 8, einen Ausgabeschritt erster Informationen umfassend, in dem, wenn ein Betriebssignal 'Pantograph anheben ' (DI-1) von einem Pantographbetriebsschalter nach dem Ausgabeschritt des Betriebssignals 'Pantograph absenken' her eingeht, erste Informationen an einen Lautsprecher und/oder eine Anzeige ausgegeben werden, der bzw. die in einem Führerstand vorhanden ist bzw. sind.

10. Verfahren zur Verwaltung von Zuginformationen nach Anspruch 9, einen Ausgabeschritt eines Betriebssignals 'Pantograph anheben' umfassend, in dem beim erneuten Empfang des Betriebssignals 'Pantograph anheben' (DI-1) nach Verstreichen einer vorbestimmten Zeit, seit die ersten Informationen nach dem Ausgabeschritt der ersten Informationen ausgegeben wurden, das Betriebssignal 'Pantograph anheben' (DI-1) als Zugsteuersteuerinformation ausgegeben wird.

11. Verfahren zur Verwaltung von Zuginformationen nach Anspruch 8, einen Umwandlungsschritt von Stufeninformationen umfassend, in dem, wenn ein Betriebssignal 'Pantograph anheben' (DI-1) von einem Pantographbetriebsschalter her eingeht, und zweite Leistungslauf-Stufeninformationen mit einem Wert, der größer ist als ein Mindestwert der ersten Leistungslauf-Stufeninformationen, nach dem Ausgabeschritt des Betriebssignals 'Pantograph absenken' ausgegeben werden, die zweiten Leistungslauf-Stufeninformationen in die ersten Leistungslauf-Stufeninformationen umgewandelt werden.

12. Verfahren zur Verwaltung von Zuginformationen nach Anspruch 11, einen Ausgabeschritt zweiter Informationen umfassend, in dem nach dem Umwandlungsschritt der Stufeninformationen zweite Informationen an einen Lautsprecher und/oder eine Anzeige ausgegeben werden, der bzw. die in einem Führerstand (5) vorgesehen ist bzw. sind.

13. Verfahren zur Verwaltung von Zuginformationen nach Anspruch 11, einen Notch-Einstellschritt umfassend, in dem, wenn sich alle Pantographen (7) aus dem Luftbereich herausbewegen, die Leistungslauf-Stufeninformationen schrittweise zu einem jeweiligen vorbestimmten Zeitpunkt nach dem Stufeninformationsumwandlungsschritt vermehrt werden.

14. Verfahren zur Verwaltung von Zuginformationen nach Anspruch 8, wobei der Positionsbestimmungsschritt einen Pantographsteuerschritt umfasst, bei dem, wenn ein Teil der Pantographen (7) in dem Luftbereich vorhanden ist, wenn der Zug anhält, das Betriebssignal 'Pantograph absenken' (DI-2) an den im Luftbereich vorhandenen Pantographen ausgegeben wird und das Betriebssignal 'Pantograph absenken ' (DI-2) an den außerhalb des Luftbereichs vorhandenen Pantographen nicht ausgegeben wird.

## Revendications

1. Dispositif de gestion d'informations de train comprenant un dispositif central d'informations de train qui gère des informations de commande de train en tant que signal de consigne de commande par rapport à un dispositif (40, 41) incorporé dans une pluralité de véhicules constituant une formation de train, sachant que le dispositif central d'informations de train inclut une unité de traitement d'informations (10a) qui collationne une distance en kilomètres mesurée sur le véhicule avec des informations de voie incluant une position d'une section d'air prévue dans des câbles aériens lorsque le train s'arrête, et sort un signal de manoeuvre 'abaisser pantographe' (DI-2) en tant qu'informations de commande de train lors de la détermination du fait qu'au moins un pantographe est présent dans la section d'air, et la détection du fait que le pantographe est dans un état levé sur la base d'informations d'état levé/abaissé sorties depuis le pantographe.

2. Le dispositif de gestion d'informations de train selon la revendication 1, sachant que lorsque l'unité de traitement d'informations (10a) reçoit un signal de manoeuvre 'lever pantographe' (DI-1) depuis un commutateur de manoeuvre de pantographe après la sortie du signal de manoeuvre 'abaisser pantographe' (DI-2), l'unité de traitement d'informations (10a) sort des premières informations vers au moins l'un d'un haut-parleur et d'un affichage prévus dans une cabine (5).

3. Le dispositif de gestion d'informations de train selon la revendication 2, sachant qu'après qu'un temps prédéterminé s'est écoulé depuis la sortie des premières informations, à la réception du signal de manoeuvre 'lever pantographe' (DI-1) de nouveau, l'unité de traitement d'informations (10a) sort le signal de manoeuvre 'lever pantographe' (DI-1) en tant que les informations de commande de train.

4. Le dispositif de gestion d'informations de train selon la revendication 1, sachant qu'un dispositif de commande maître (20) qui sort des informations d'encoche de fonctionnement de puissance est incorporé dans le véhicule, et lorsque l'unité de traitement d'informations (10a) reçoit un signal de manoeuvre 'lever pantographe' (DI-1) depuis un commutateur de manoeuvre de pantographe après la sortie du signal de manoeuvre 'abaisser pantographe' (DI-2), et le dispositif de commande maître (20) sort des deuxièmes informations d'encoche de fonctionnement de puissance avec une valeur supérieure à une valeur minimale des premières informations d'encoche de fonctionnement de puissance, l'unité de traitement d'informations (10a) convertit les deuxièmes informations d'encoche de fonctionnement de puissance en les premières informations d'encoche de fonctionnement de puissance.

5. Le dispositif de gestion d'informations de train selon la revendication 4, sachant que l'unité de traitement d'informations (10a) sort des deuxièmes informations vers au moins l'un d'un haut-parleur et d'un affichage prévus dans une cabine, après conversion des deuxièmes informations d'encoche de fonctionnement de puissance en les premières informations d'encoche de fonctionnement de puissance.

6. Le dispositif de gestion d'informations de train selon la revendication 4, sachant que lorsque tous les pantographes (7) sortent de la section d'air après que les deuxièmes informations d'encoche de fonctionnement de puissance sont converties en les premières informations d'encoche de fonctionnement de puissance, l'unité de traitement d'informations (10a) augmente les informations d'encoche de fonctionnement de puissance de manière progressive à chaque temps prédéterminé.

7. Le dispositif de gestion d'informations de train selon la revendication 1, sachant que lorsqu'une partie des pantographes (7) est présente dans la section d'air lorsque le train s'arrête, l'unité de traitement d'informations (10a) sort le signal de manoeuvre 'abaisser pantographe' (DI-2) vers le pantographe présent dans la section d'air, et ne sort pas le signal de manoeuvre 'abaisser pantographe' (DI-2) vers le pantographe présent en dehors de la section d'air.

8. Procédé de gestion d'informations de train applicable à un dispositif central d'informations de train qui gère des informations de commande de train en tant que signal de consigne de commande par rapport à un dispositif (40, 41) incorporé dans une pluralité de véhicules constituant une formation de train, le procédé de gestion d'informations de train comprenant :
une étape de détermination de position à laquelle une distance en kilomètres mesurée sur le véhicule est collationnée avec des informations de voie incluant une position d'une section d'air prévue dans des câbles aériens lorsque le train s'arrête, pour déterminer si au moins un pantographe est présent dans la section d'air ; une étape de détection de pantographe à laquelle, lorsqu'il est déterminé à l'étape de détermination de position que le pantographe est présent dans la section d'air, il est détecté si le pantographe est dans un état levé sur la base d'informations d'état levé/abaissé sorties depuis le pantographe ; et une étape de sortie de signal de manoeuvre 'abaisser pantographe' à laquelle, lorsqu'il est à l'étape de détection de pantographe que le pantographe est dans l'état levé, un signal de manoeuvre 'abaisser pantographe' (DI-2) est sorti en tant qu'informations de commande de train.

9. Le procédé de gestion d'informations de train selon la revendication 8, comprenant une étape de sortie de premières informations à laquelle, lorsqu'un signal de manoeuvre 'lever pantographe' (DI-1) est reçu depuis un commutateur de manoeuvre de pantographe après l'étape de sortie de signal de manoeuvre 'abaisser pantographe', des premières informations sont sorties vers au moins l'un d'un haut-parleur et d'un affichage prévus dans une cabine.

10. Le procédé de gestion d'informations de train selon la revendication 9, comprenant une étape de sortie de signal de manoeuvre 'lever pantographe' à laquelle, lorsque le signal de manoeuvre 'lever pantographe' (DI-1) est reçu de nouveau après qu'un temps prédéterminé s'est écoulé depuis la sortie des premières informations après l'étape de sortie de premières informations, un signal de manoeuvre 'lever pantographe' (DI-1) est sorti en tant que les informations de commande de train.

11. Le procédé de gestion d'informations de train selon la revendication 8, comprenant une étape de conversion d'informations d'encoche à laquelle, lorsqu'un signal de manoeuvre 'lever pantographe' (DI-1) est reçu depuis un commutateur de manoeuvre de pantographe, et des deuxièmes informations d'encoche de fonctionnement de puissance avec une valeur supérieure à une valeur minimale des premières informations d'encoche de fonctionnement de puissance sont sorties après l'étape de sortie de signal de manoeuvre 'abaisser pantographe', les deuxièmes informations d'encoche de fonctionnement de puissance sont converties en les premières informations d'encoche de fonctionnement de puissance.

12. Le procédé de gestion d'informations de train selon la revendication 11, comprenant une étape de sortie de deuxièmes informations à laquelle des deuxièmes informations sont sorties vers au moins l'un d'un haut-parleur et d'un affichage prévus dans une cabine (5), après l'étape de conversion d'informations d'encoche.

13. Le procédé de gestion d'informations de train selon la revendication 11, comprenant une étape de réglage d'encoche à laquelle, lorsque tous les pantographes (7) sortent de la section d'air, les informations d'encoche de fonctionnement de puissance sont augmentées de manière progressive à chaque temps prédéterminé, après l'étape de conversion d'informations d'encoche.

14. Le procédé de gestion d'informations de train selon la revendication 8, sachant que l'étape de détermination de position inclut une étape de commande de pantographe à laquelle, lorsqu'une partie des pantographes (7) est présente dans la section d'air lorsque le train s'arrête, le signal de manoeuvre 'abaisser pantographe' (DI-2) est sorti vers le pantographe présent dans la section d'air, et le signal de manoeuvre 'abaisser pantographe' (DI-2) n'est pas sorti vers le pantographe présent en dehors de la section d'air.
